# EUROPEAN PATENT SPECIFICATION

(11) **EP 2 342 998 B1**
(45) Date of publication and mention of the grant of the patent: **25.05.2016**
(21) Application number: 10197207.3
(22) Date of filing: 28.12.2010
(51) Int. Cl.: A47J 31/54

(54) **Heat chamber for machines for infusions and the like, particularly for heating water for preparing espresso coffee**
Wärmekammer für Maschinen für Kräutertees und dergleichen, insbesondere zum Erhitzen von Wasser zur Zubereitung von Espresso
Chambre de chaleur pour machines pour infusions et similaires, en particulier pour chauffer de l'eau pour la préparation d'un café expresso

(30) Priority: 11.01.2010 IT MI20100015
(43) Date of publication of application: 13.07.2011
(73) Proprietor: Swiss Caffe Asia Ltd., Hong Kong (HK)
(72) Inventor: Aardenburg, Cornelius J.M., 6900, Lugano (CH)
(74) Representative: Modiano, Micaela Nadia

(56) References cited:
- EP-A1- 0 395 907
- EP-A1- 1 529 470
- WO-A1-2009/156190
- DE-A1- 2 948 591
- FR-A1- 2 404 983

## Description

The present invention relates to a heat chamber for machines for infusions and the like, particularly for heating water for preparing espresso coffee.

In the field of machines for preparing infusions or the like, such as for example for preparing espresso coffee, it is known to electrically heat the water required to provide the infusion.

This heating typically occurs by means of a heat chamber that has two main portions made of heat-conducting material which accommodate, respectively, a duct through which the water to be heated flows and an electric resistor which is coiled or has any other shape and through which electric current can flow so as to generate the heat necessary to heat the water.

In greater detail, this heat is supplied to the water to be heated by thermal conduction by means of the heat-conducting material of which the chamber is made.

These heat chambers of the known type are not devoid of drawbacks, which include the fact that in order to obtain an average temperature of the water circulating inside the heat chamber that is high enough to be used for providing infusions and the like it is necessary to supply a high amount of electric power with which to supply the electric resistor in order to generate the required heat.

Another drawback of heat chambers of the known type consists in the fact that the efficiency of the temperature of the water heated by the heat chamber is generally inconstant, especially during continuous use of the apparatus in which the heat chamber is installed.

Prior art heat chambers for machines for infusions and the like are for instance disclosed in documents DE2948591 A1 and FR2404983.

The aim of the present invention is to provide a heat chamber for machines for infusions and the like, particularly for heating water for preparing espresso coffee, that makes it possible to overcome the drawbacks and the limitations of the background art, by reducing the amount of electric power needed to heat the water for preparing infusions.

Within this aim, an object of the present invention is to provide a heat chamber for machines for infusions and the like, particularly for heating water for preparing espresso coffee, that makes it possible to heat a larger quantity of water than can be heated with the background art for equal general volumes of said heat chamber, so as to allow a greater number of consecutive dispensing actions.

This aim and these and other objects which will become better apparent hereinafter are achieved by a heat chamber for machines for infusions and the like, particularly for heating water for preparing espresso coffee, defined such as in claim 1.

Further characteristics and advantages of the present invention will become apparent from the description of five preferred but not exclusive embodiments of a heat chamber for machines for infusions and the like, particularly for heating water for preparing espresso coffee, according to the invention, illustrated by way of non-limiting example in the accompanying drawings wherein:
Figure 1 is a perspective view, taken from above, of a first embodiment of a heat chamber for machines for infusions and the like, particularly for heating water for preparing espresso coffee, according to the invention;
Figure 2 is a perspective view, taken from below, of the heat chamber shown in Figure 1;
Figure 3 is an exploded perspective view of the heat chamber shown in Figure 1;
Figure 4 is a perspective view, taken from above, of the central part of the heat chamber shown in Figure 1;
Figure 5 is a perspective view, taken from below, of the central part of the heat chamber shown in Figure 1;
Figure 6 is a plan view of the heat chamber shown in Figure 1;
Figure 7 is a sectional perspective view, taken along the line VII-VII, of the heat chamber shown in Figure 6;
Figure 8 is a perspective view, taken from above, of a second embodiment of a heat chamber for machines for infusions and the like, particularly for heating water for preparing espresso coffee, according to the invention;
Figure 9 is a perspective view, taken from below, of the heat chamber shown in Figure 8;
Figure 10 is an exploded perspective view of the heat chamber shown in Figure 8;
Figure 11 is a perspective view, taken from above, of the central part of the heat chamber shown in Figure 8;
Figure 12 is a perspective view, taken from below, of the central part of the heat chamber shown in Figure 8;
Figure 13 is a plan view of the heat chamber shown in Figure 8;
Figure 14 is a sectional perspective view, taken along the line XIV-XIV, of the heat chamber shown in Figure 13;
Figure 15 is a perspective view, taken from above, of a third embodiment of a heat chamber for machines for infusions and the like, particularly for heating water for preparing espresso coffee, not forming part of the present invention and only useful to better understand it;
Figure 16 is a perspective view, taken from below, of the heat chamber shown in Figure 15;
Figure 17 is a plan view of the heat chamber shown in Figure 15;
Figure 18 is a sectional perspective view, taken along the line XVII-XVII, of the heat chamber shown in Figure 17;
Figure 19 is a side elevation view of the heat chamber shown in Figure 15;
Figure 20 is a sectional perspective view, taken along the line XX-XX, of the heat chamber shown in Figure 19;
Figure 21 is a perspective view, taken from above, of a fourth embodiment of a heat chamber for machines for infusions and the like, particularly for heating water for preparing espresso coffee, not forming part of the present invention and only useful to better understand it;
Figure 22 is a perspective view, taken from below, of the heat chamber shown in Figure 21;
Figure 23 is an exploded perspective view of the heat chamber shown in Figure 21;
Figure 24 is a plan view of the heat chamber shown in Figure 21;
Figure 25 is a sectional perspective view, taken along the line XXV-XXV, of the heat chamber shown in Figure 24;
Figure 26 is an exploded perspective view, taken from above, of a fifth embodiment of a heat chamber for machines for infusions and the like, particularly for heating water for preparing espresso coffee, according to the invention;
Figure 27 is a Plan view of the heat chamber shown in Figure 26;
Figure 28 is a sectional perspective view, taken along the line XXVIII-XXVIII, of the heat chamber shown in Figure 26.

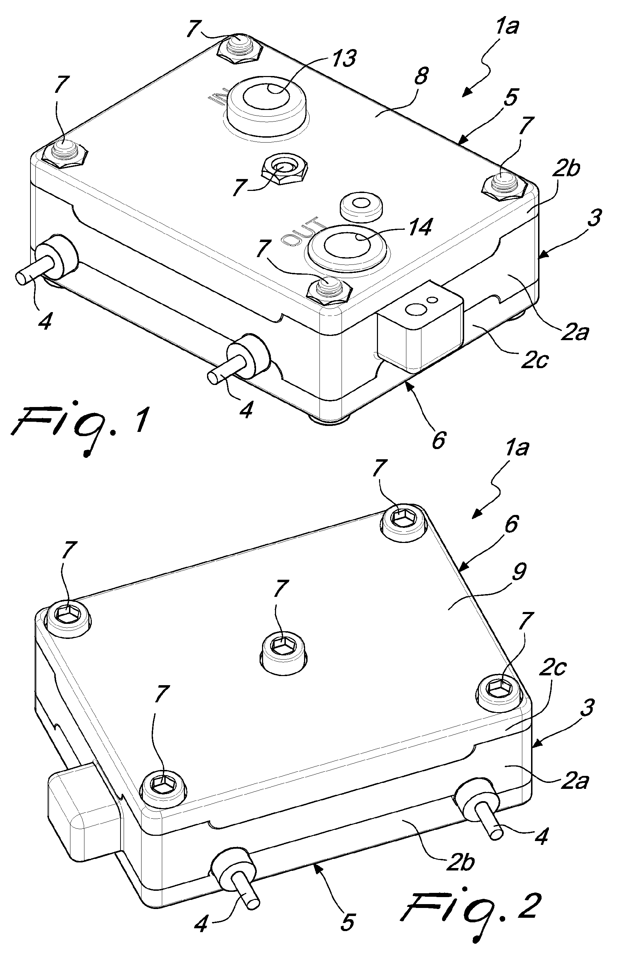

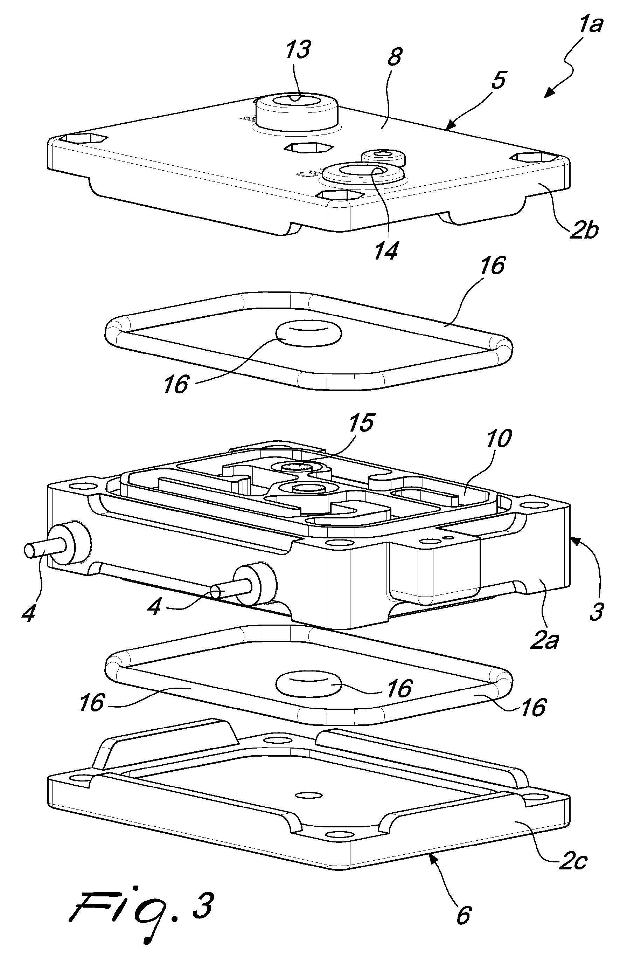

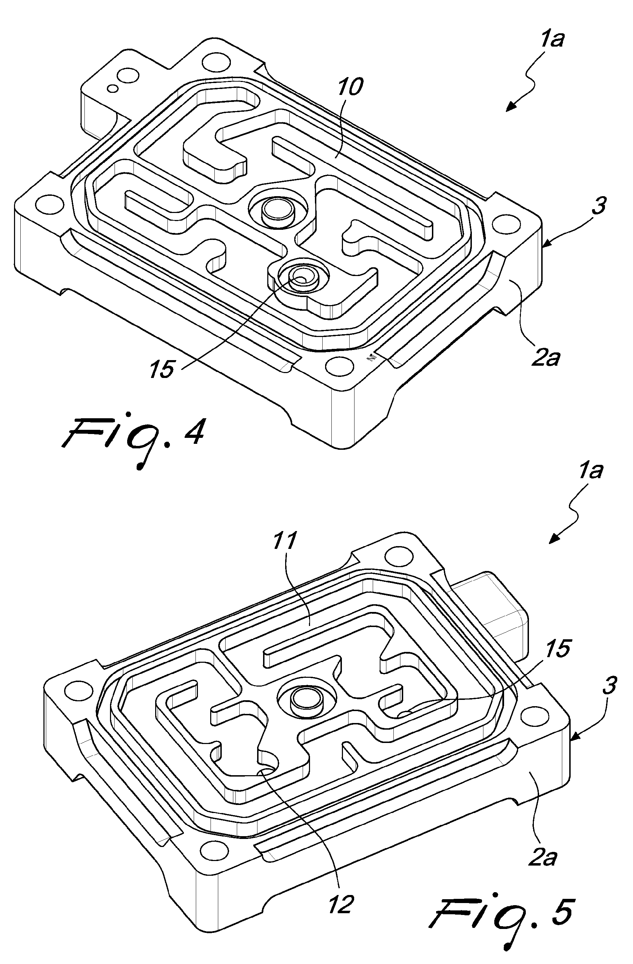

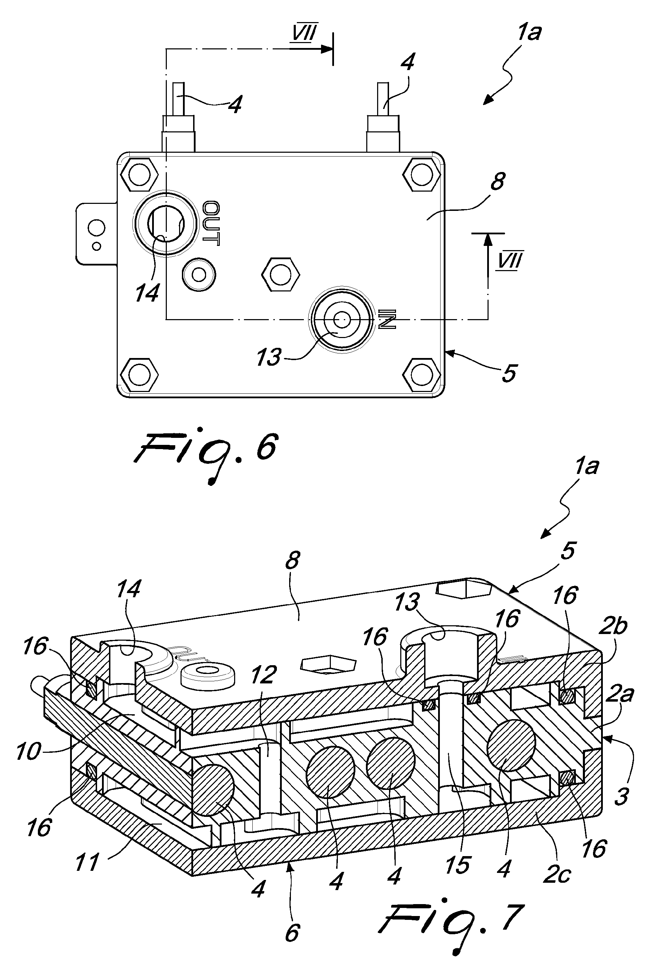

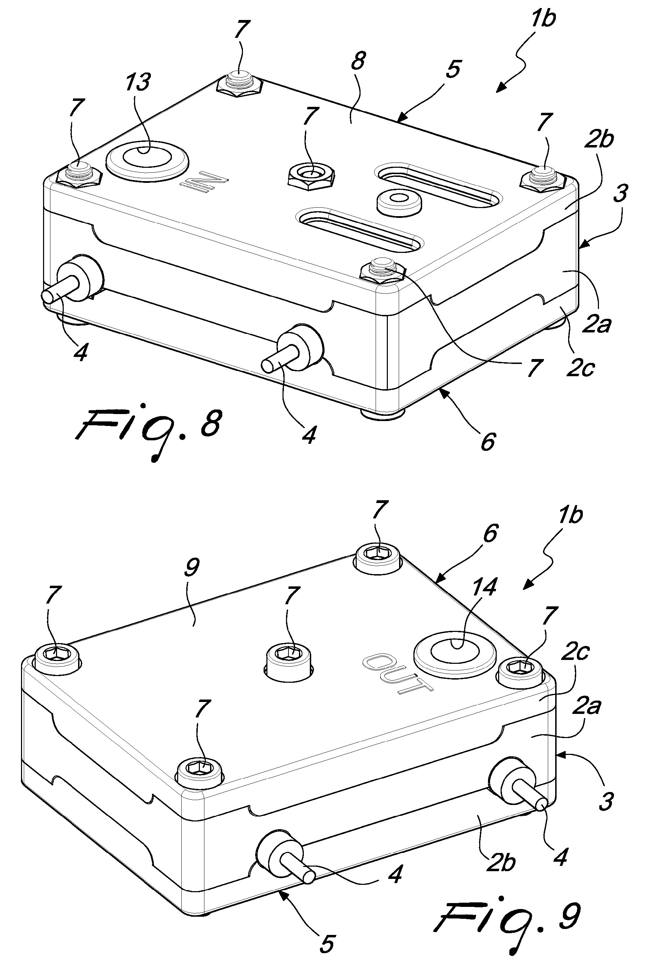

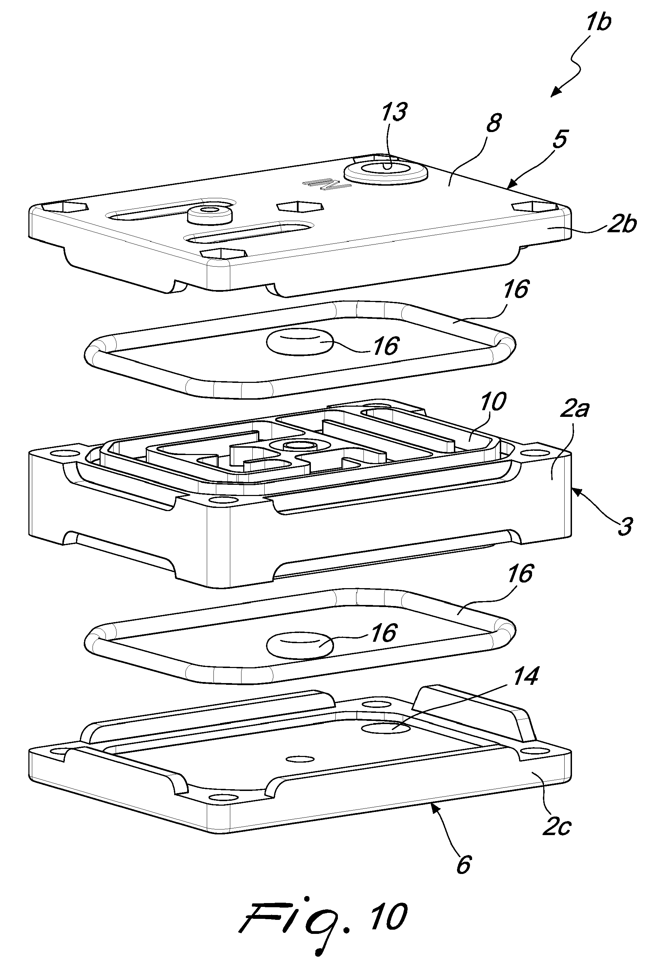

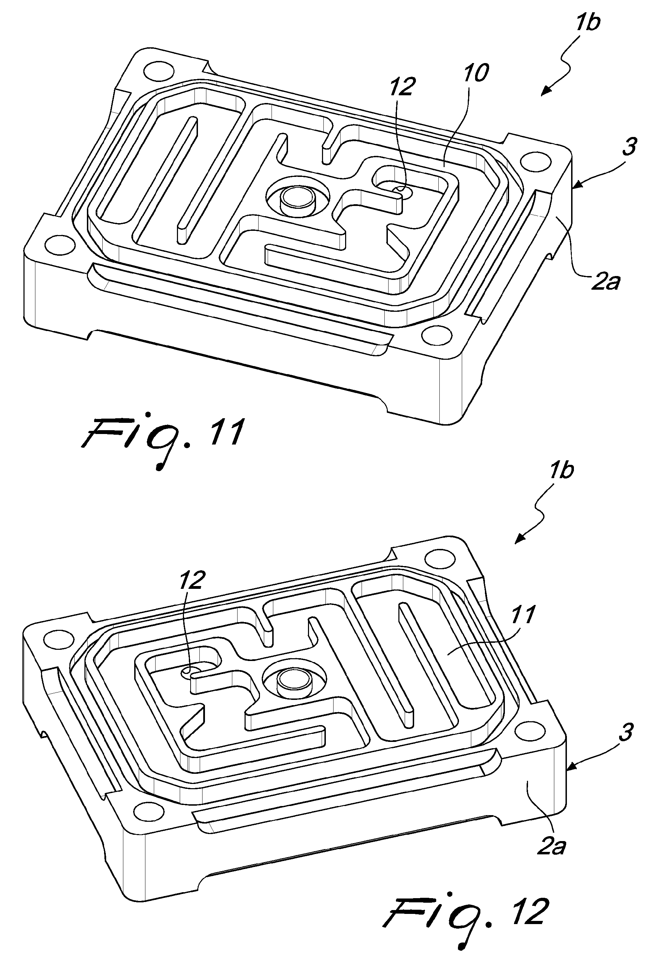

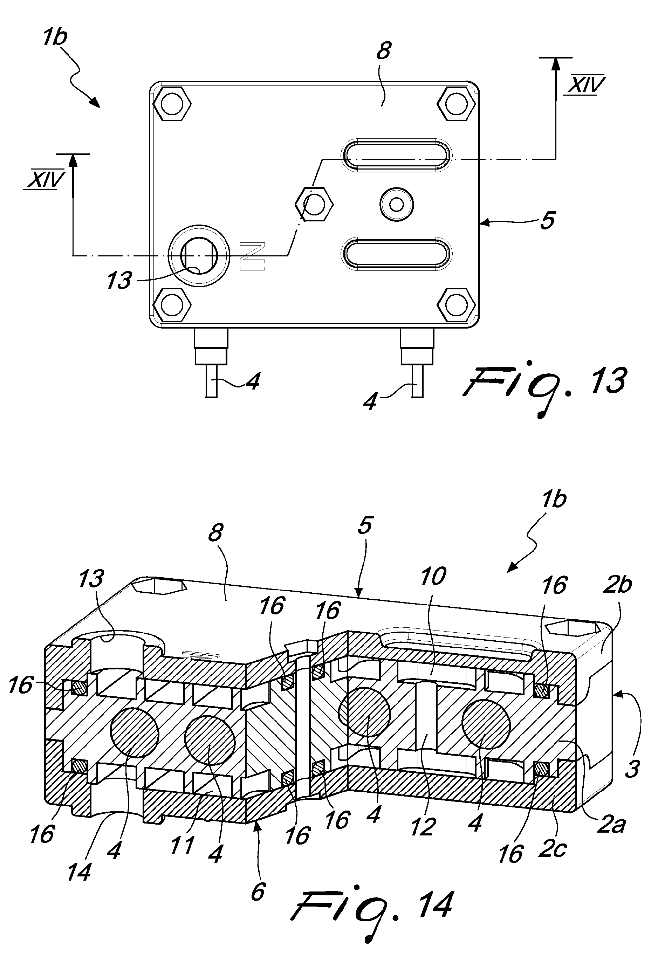

With reference to Figures 1 to 14, the heat chamber for machines for infusions and the like, particularly for heating water for preparing espresso coffee, designated in the first two proposed embodiments by the reference numerals 1a and 1b, comprises a main body having a substantially parallelepiped shape, which is made of a heat-conducting material such as for example a metal.

The heat chambers 1a and 1b have at least one first portion 2a, which is defined by a central part 3 of the main body that extends substantially along a longitudinal plane thereof, which is associated with heating means 4, which consist, for example, of an electric resistor that extends substantially along said longitudinal plane and is interposed between at least two second end portions 2b and 2c of the main body which are defined by two covering elements 5 and 6, which can be associated with the central part 3 by way of, for example, screw means 7 so as to be detachable from it as necessary.

More precisely, the two covering elements 5 and 6 define the second end portions 2b and 2c, which are arranged at two opposite faces of the first portion 2a, thus defining the end faces 8 and 9 of the heat chambers 1a and 1b.

According to the invention, at at least two faces of the first portion 2a, each of which adjoins at least one of the second end portions 2b and 2c, at least two mutually connected channels 10 and 11 are provided for the internal flow of water.

More precisely, each of the two internal flow channels 10 and 11, which are defined by open-top grooves provided on the central part 3 and are closed by the two covering elements 5 and 6, extends substantially parallel to the electric resistor of the heating means 4 along a convoluted path in order to optimize the quantity of water that can circulate inside the heat chamber 1a or 1b.

As already stated, the two internal flow channels 10 and 11 are mutually connected by means of a first transverse channel 15 that runs end to end through all of the first portion 2a of the main body.

Depending on whether it is the first or the second embodiment, in the heat chamber 1a the internal flow channels 10 and 11 have at least one inlet 13 and at least one outlet 14, respectively, for the inflow and outflow of the water from the main body, both arranged at only one of the two end faces 8 and 9 of the heat chamber 1a.

In this case, in order to allow the return of the water from one of the second end portions 2b or 2c to the other one there is a second transverse channel 12, which runs end to end through all of the first portion 2a of the main body and leads to the outlet 14.

Obviously, in order to ensure water-tightness between one element and the other and/or between one channel and the other, thus avoiding leaks or unwanted exchanges of fluid, gaskets 16 are provided, which can be interposed between the two covering elements 5 and 6 and the central part 3.

Differently, in the heat chamber 1b the internal flow channels 10 and 11 have at least one inlet 13 and at least one outlet 14, respectively, for the inflow and outflow of water to/from the main body, each arranged at one of the two end faces 8 and 9 of the heat chamber 1b.

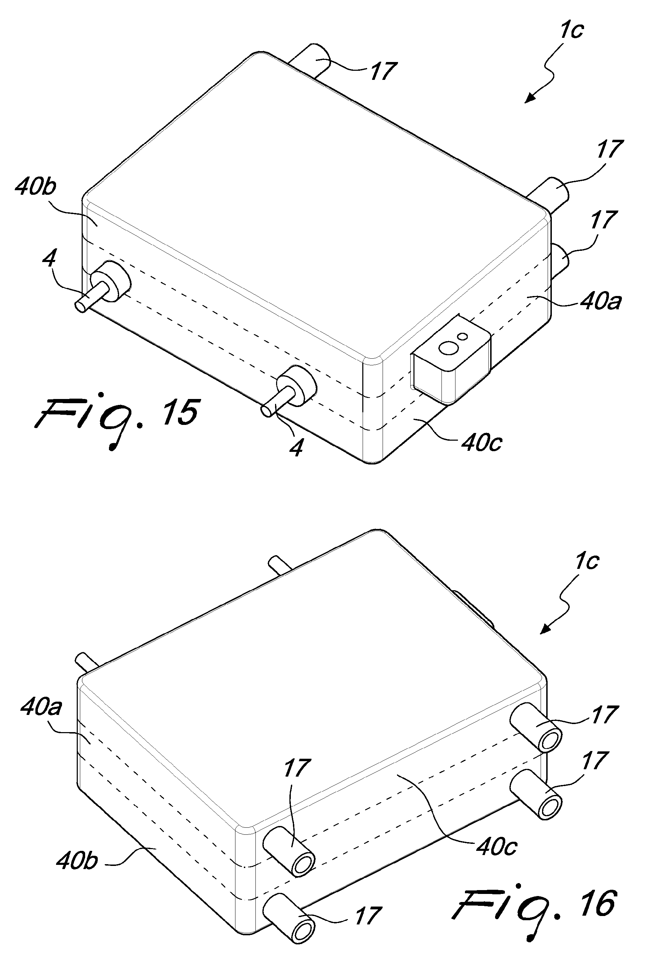

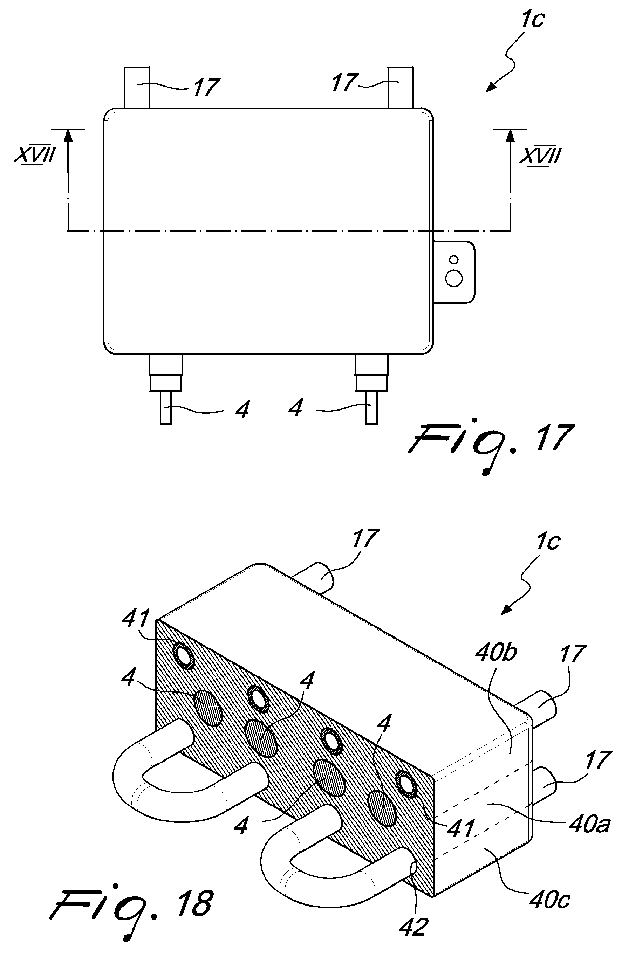

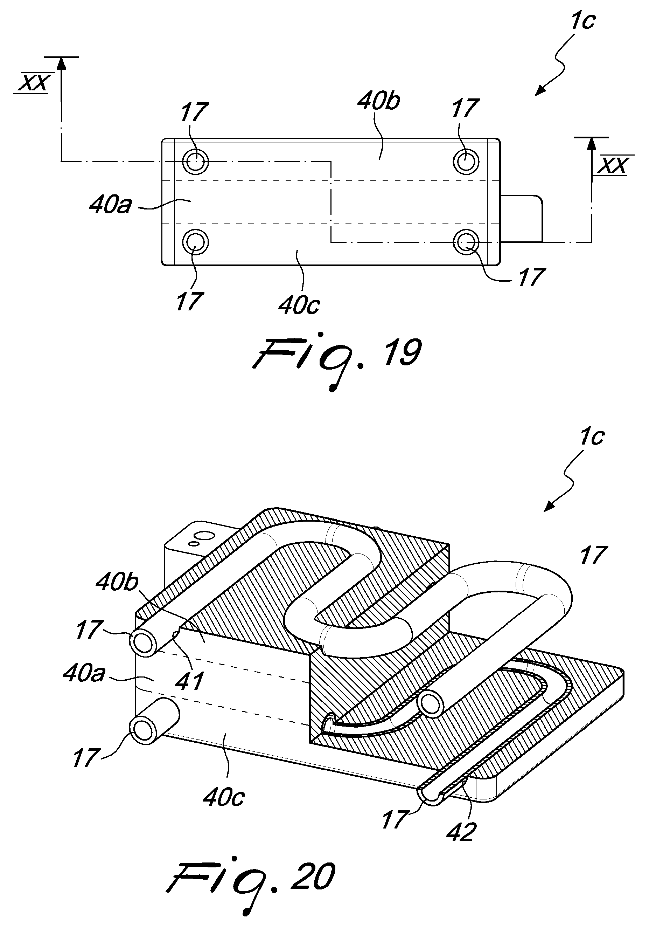

With reference to Figures 15 to 20, differently from the first two embodiments, in the third embodiment of the heat chamber not forming part of the invention such as claimed, generally designated by the reference numeral 1c, the main body, which has a substantially parallelepiped shape and is monolithic, is provided monolithically with the internal flow channels 41 and 42, which are hollowed out inside it and are no longer obtained as the result of an assembly of a plurality of parts.

More precisely, the internal flow channels 41 and 42 are defined by ducts 17 made of a heat-conducting material and inserted in cavities provided in the main body laterally to a first portion 40a crossed by an electric resistor, of the type of those described earlier, and interposed between second end portions 40b and 40c.

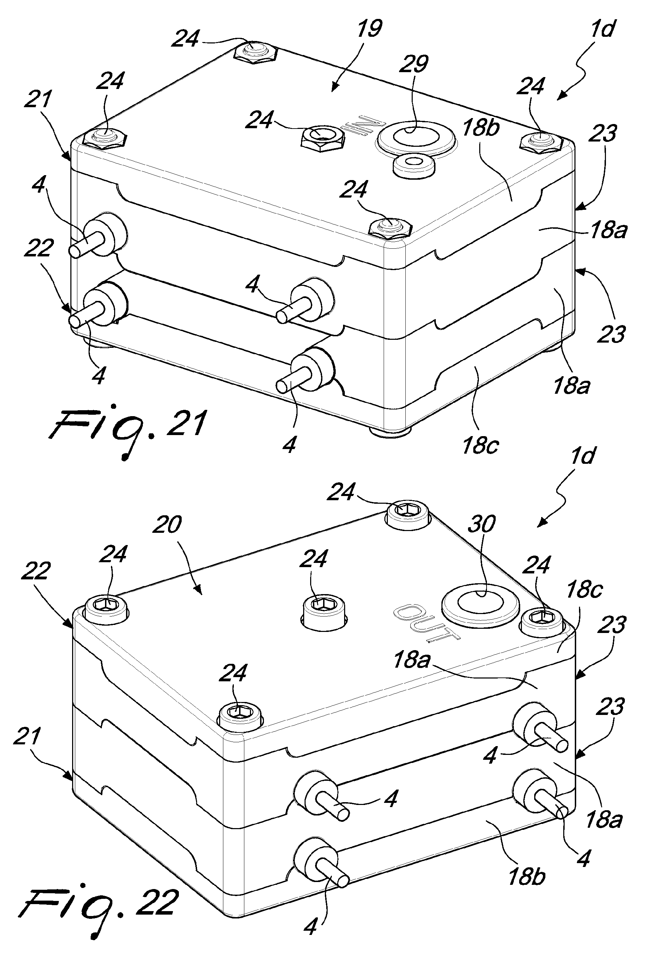

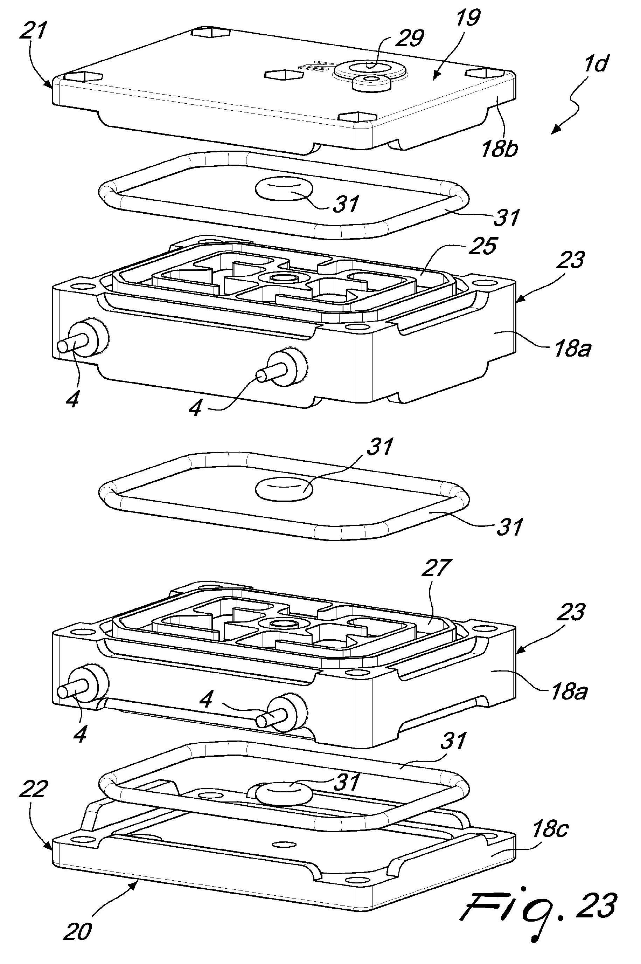

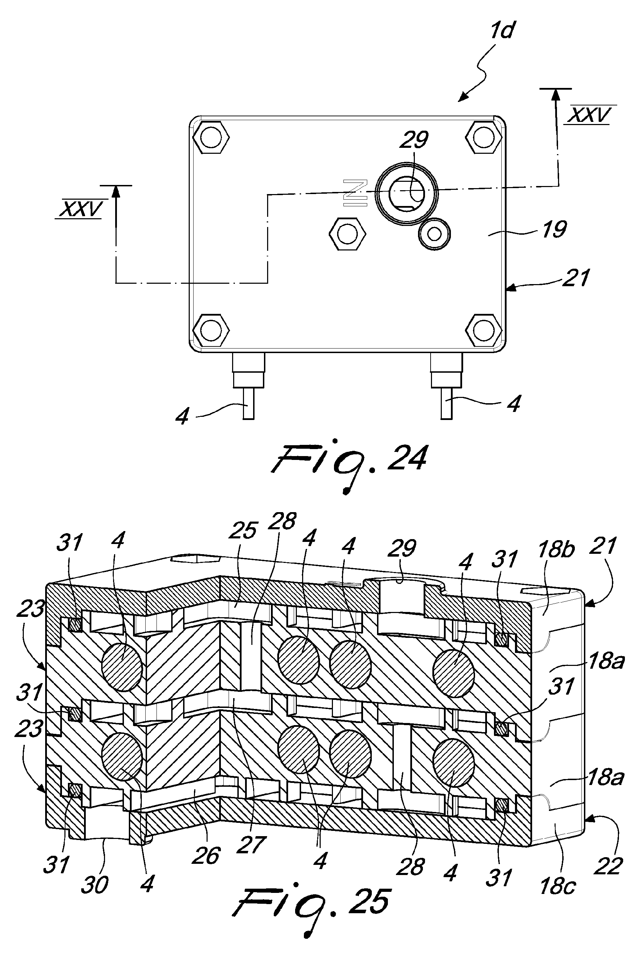

With reference to Figures 21 to 25, in the fourth embodiment of the heat chamber not forming part of the invention such as claimed, generally designated by the reference numeral 1d, the latter comprises a main body that has a substantially parallelepiped shape and is made of a heat-conducting material such as for example a metal.

The heat chamber 1d comprises at least one second intermediate portion interposed between two first portions 18a, each of which is associated with heating means 4, of the type of those of the other embodiments, and is in turn interposed between the second intermediate portion and two second end portions 18b and 18c.

In this case, too, the second end portions 18b and 18c are arranged at two opposite faces of the first portions 18a, defining the end faces 19 and 20 of the heat chamber 1d.

In greater detail, the main body is constituted by two covering elements 21 and 22, which define the two second end portions 18b and 18c and are superimposed on a plurality of mutually stacked central parts 23, each of which monolithically defines a first portion 18a and a second intermediate portion.

As for the first two embodiments, the components of the heat chamber 1 d can be held together, for example, by way of screw means 24 so as to be detachable as necessary.

According to the invention, at at least two faces of each of the first portions 18a, each of which adjoins at least one of the second end portions 18b or 18c or the second intermediate portion, an internal flow channel 25, 26 or 27 is defined.

More precisely, each of the two internal flow channels 25, 26 and 27, which are mutually connected and are defined by open-top grooves provided on the central parts 23 and closed by two covering elements 21 and 22 or by an adjoining central part 23, extends substantially parallel to the electric resistor of the heating means 4 along a convoluted path in order to optimize the quantity of water that can circulate inside the heat chamber 1d.

As already mentioned, the internal flow channels 25, 26 and 27 are mutually connected by means of first transverse channels 28 that run end to end through respective first portions 18a of the main body.

In this embodiment, as in the first embodiment, inside the heat chamber 1d the internal flow channels 25 and 26 and 27 have at least one inlet 29 and at least one outlet 30, respectively, for the inflow and outflow of water to/from the main body, each arranged at one of the two end faces 19 and 20 of the main body.

Obviously, in this embodiment too, in order to ensure water-tightness between one element and the other and/or between one channel and the other, thus avoiding leaks or unwanted exchanges of fluids, gaskets 31 are provided that can be interposed between the two covering elements 21 and 22 and the central parts 23.

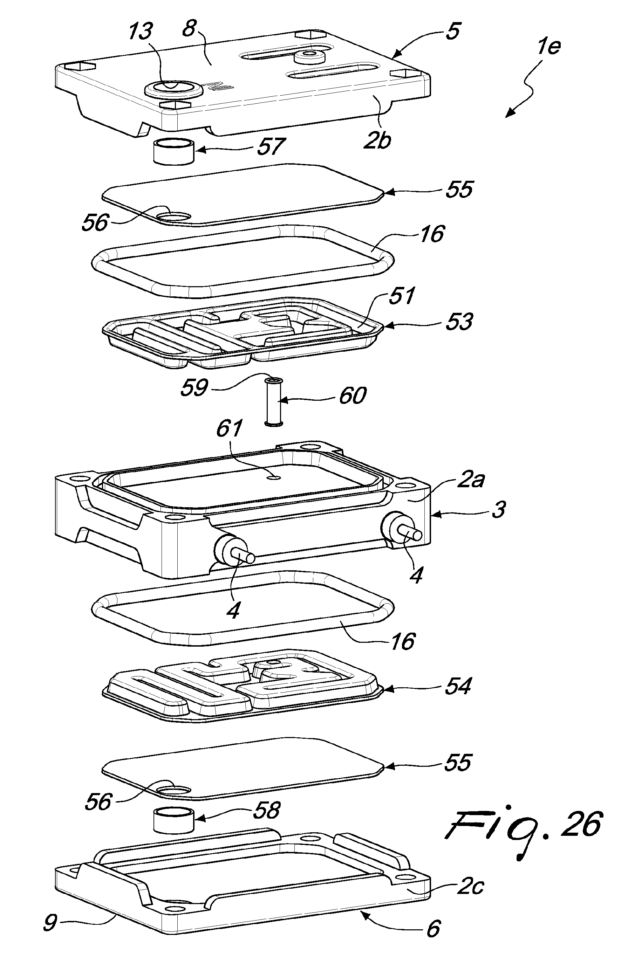

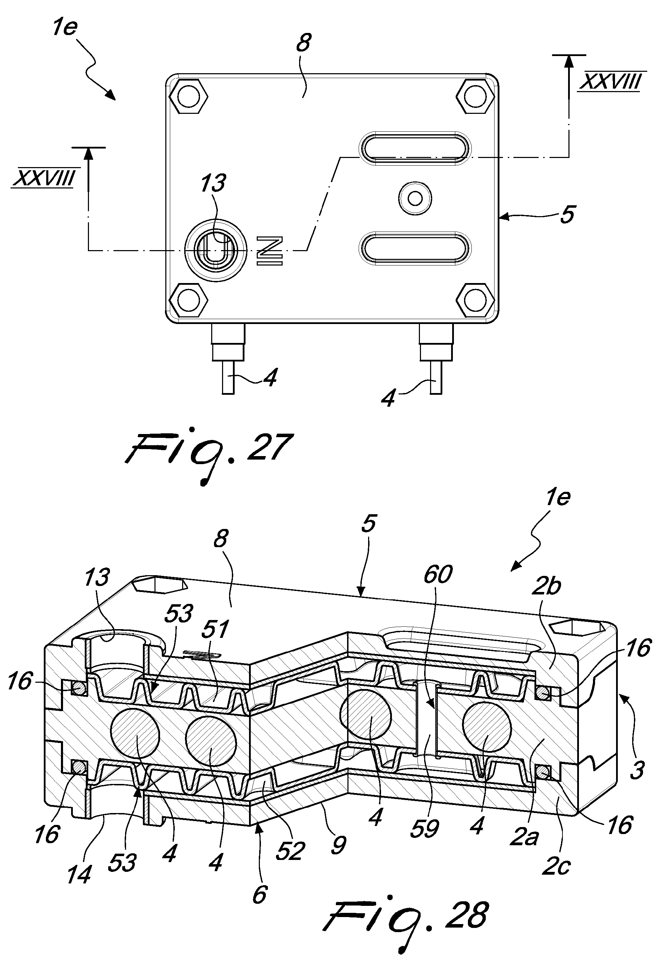

With reference to Figures 26 to 28, in the fifth embodiment of the heat chamber according to the invention, generally designated by the reference numeral 1e, the latter comprises a main body that has a substantially parallelepiped shape and is made of a heat-conducting material such as, for example, a metal.

The heat chamber 1e has at least one first portion 2a, defined by a central part 3 of the main body that extends substantially along a longitudinal plane thereof, which is associated with heating means 4 that consist, for example, of an electric resistor that extends substantially along said longitudinal plane and is interposed between at least two second end portions 2b and 2c of the main body which are defined by two covering elements 5 and 6 which can be associated with the central part 3 by way of screw means so as to be detachable from it as necessary.

More precisely, the two covering elements 5 and 6 define the second end portions 2b and 2c, which are arranged at two opposite faces of the first portion 2a, defining the end faces 8 and 9 of the heat chamber 1e.

According to the invention, at at least two faces of the first portion 2a, each of which adjoins at least one of the second end portions 2b and 2c, there are at least two mutually connected channels 51 and 52 for the internal flow of water.

More precisely, each of the two internal flow channels 51 and 52 is provided by two grooved bodies 53 and 54 that can be interposed between the central part 3 and two containment plates 55 accommodated inside the two covering elements 5 and 6.

More precisely, the internal flow channels 51 and 52 extend substantially parallel to the electric resistor of the heating means 4 along a convoluted path in order to optimize the amount of water that can circulate inside the heat chamber 1e.

As already mentioned, the two internal flow channels 51 and 52 are mutually connected by means of a first transverse channel 59 that runs end to end through all of the first portion 2a of the main body and is defined by a tubular body 60 which is accommodated in an adapted seat 61 of the central part 3 and leads with its ends into the two slotted bodies 53 and 54.

Moreover, in the heat chamber 1e the internal flow channels 51 and 52 are connected, respectively, to at least one inlet 13 and at least one outlet 14, respectively, for the inflow and outflow of water to/from the main body, each located at one of the two end faces 8 and 9 of the heat chamber 1e.

This connection is made possible thanks to two collars 57 and 58, which are jointly connected, respectively, to the two covering elements 5 and 6 and are connected to the two grooved bodies 53 and 54 by means of two holes 56 defined in the containment plates 55.

As an alternative, the two collars 57 and 58 can be jointly connected, respectively, to the two containment plates 55 at the holes 56 defined in the containment plates 55.

Obviously, in order to ensure water-tightness between one element and the other and/or between one channel and the other, thus avoiding leaks or unwanted exchanges of fluids, gaskets 16 are provided that can be interposed between the two covering elements 5 and 6 and the central part 3.

Moreover, there can be other embodiments constituted by combinations of characteristics of the embodiments described previously.

Operation of the heat chamber 1a, 1b, 1c, 1d and 1e for machines for infusions and the like, particularly for heating water for preparing espresso coffee, in its embodiments, is clear and apparent from what has been described.

In practice it has been found that the heat chamber for machines for infusions and the like, particularly for heating water for preparing espresso coffee, according to the present invention, fully achieves the intended aim and objects, since thanks to the flow of the water to be heated from both sides of the electric resistor it enables more effective heating of this water with higher average temperatures and with a saving of electric power.

This increase in performance is even more substantial if a heat chamber according to the invention with more than two water flows and with a plurality of electric resistors is used.

Another advantage of the heat chamber for machines for infusions and the like, according to the present invention, consists in the fact that it is possible to dispense continuously over time a greater amount of infusion, at the desired temperature, than in the background art, thus increasing the efficiency of the heat chamber.

A further advantage of the heat chamber for machines for infusions and the like, according to the present invention, consists in the fact that it is structurally simple, easy to implement and at competitive costs.

The heat chamber for machines for infusions and the like, particularly for heating water for preparing espresso coffee, thus conceived, is susceptible of numerous modifications and variations, all of which are within the scope of the appended claims.

All the details may further be replaced with other, technically equivalent elements.

In practice, the materials used, as long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A heat chamber (1a, 1b, 1d, 1e) for machines for infusions and the like, particularly for heating water for preparing espresso coffee, comprising a main body made of a heat-conducting material and provided with at least one first portion (2a, 18a) which is associated with heating means (4) and is interposed between at least two second end portions (2b, 2c, 18b, 18c) of said main body, at at least two faces of said at least one first portion (2a, 18a), each of which adjoins at least one of said second end portions (2b, 2c, 18b, 18c ), at least two mutually connected channels (10, 11, 25, 26, 27, 51, 52) for the internal flow of water being provided, said at least one first portion (2a, 18a) and said at least two second end portions being all distinct portions that form said main body, said channels being respectively defined in the opposite faces of said at least one first portion and being connected one another, so that the water flows along one channel and then passes to the other channel, said heating means (4) being interposed between said at least two channels (10, 11, 25, 26, 27, 51, 52), **characterised by** said at least two mutually connected channels being defined by open-top grooves that are closed by said at least two second end portions.

2. The heat chamber (1d) according to claim 1, **characterized in that** it comprises a plurality of second intermediate portions and a plurality of said first portions (18a) which are associated with said heating means (4) and are interposed between said second intermediate portions and said second end portions (18b, 18c), at at least two faces of each of said first portions (18a), each adjoining at least one of said second intermediate portions or of said second end portions (18b, 18c), there being mutually connected channels (25, 26, 27) for the internal flow of water.

3. The heat chamber (1a, 1b, 1d, 1e) according to one of claims 1 and 2, **characterized in that** said heating means (4) comprise, for each of said first portions (2a, 18a), at least one electric resistor, which extends substantially on a longitudinal plane of said main body.

4. The heat chamber (1a, 1b, 1d, 1e) according to one or more of the preceding claims, **characterized in that** each of said internal flow channels (10, 11, 25, 26, 27, 51, 52) lies substantially parallel to said at least one electric resistor.

5. The heat chamber (1a, 1b, 1d, 1e) according to one or more of the preceding claims, **characterized in that** it comprises at least one inlet (13, 29) and at least one outlet (14, 30) of said internal flow channels (10, 11, 25, 26, 51, 52), respectively, for the inflow and outflow of water to/from said main body.

6. The heat chamber (1b, 1d, 1e) according to one or more of the preceding claims, **characterized in that** said at least one inlet (13, 29) and said at least one outlet (14, 30) are arranged at two opposite faces of said first portion (2a), defining the end faces (8, 9, 19, 20) of said heat chamber (1a, 1d, 1e).

7. The heat chamber (1a) according to one or more of claims 1 to 5, **characterized in that** said at least one inlet (13) and said at least one outlet (14) are both arranged at one of said end faces (8, 9) of said main body.

8. The heat chamber (1a, 1b, 1d, 1e) according to claim 6 or 7, **characterized in that** said main body comprises at least one central part (3, 23), which defines said first portion (2a, 18a) and is interposed between two covering elements (5, 6, 21, 22) which are associated with said central part (3, 23) and can be separated therefrom, said two covering elements (5, 6, 21, 22) defining said second end portions (2b, 2c, 18b, 18c) which are arranged at two opposite faces of said first portion (2a), defining the end faces (8, 9, 19, 20) of said heat chamber (1a, 1b, 1d, 1e).

9. The heat chamber (1d) according to claim 6 or 7, **characterized in that** said main body comprises a plurality of central parts (23) which are mutually stacked, each part monolithically defining one of said first portions (18a) and one of said second intermediate portions, said stacked central parts (23) being interposed between two covering elements (19, 20), which define said second end portions (18b, 18c), and being capable of being associated with said stacked central parts (23).

## Patentansprüche

1. Wärmekammer (1a, 1b, 1d, 1e) für Heißgetränkemaschinen o.Ä., insbesondere zum Aufheizen von Wasser zur Bereitung von Espresso, welche aufweist:
- einen Grundkörper, der aus einem wärmeleitenden Material gefertigt und mit mindestens einem ersten Abschnitt (2a, 18a) versehen ist, der einer Aufheizeinrichtung (4) zugeordnet und zwischen mindestens zwei zweiten Endabschnitten (2b, 2c, 18b, 18c) des Grundkörpers zwischengeordnet ist, an mindestens zwei Flächen des mindestens einen ersten Abschnitts (2a, 18a), von denen jede an mindestens einen der zweiten Endabschnitte (2b, 2c, 18b, 18c) angrenzt, mindestens zwei miteinander verbundene Kanüle (10, 11, 25, 26, 27, 51, 52) für den internen Fluss von bereitgestelltem Wasser, wobei der mindestens eine erste Abschnitt (2a, 18a) und die mindestens zwei zweiten Endabschnitte vonelnander verschiedene Abschnitte sind, die den Grundkörper bilden, wobei die Kanäle jeweils in den gegenüberliegenden Flächen des mindestens einen ersten Abschnitts definiert sind und miteinander verbunden sind, so dass das Wasser den einen Kanal entlangflleßt und dann in den anderen Kanal geleitet wird, wobei die Heizeinrichtung (4) zwischen die mindestens zwei Kanäle (10, 11, 25, 26, 27, 51, 52) zwischengeschaltet ist,
**dadurch gekennzeichnet, dass**
die mindestens zwei miteinander verbundenen Kanäle durch oben offene Nuten definiert sind, die durch die mindestens zwei zweite Endabschnitte verschlossen sind.

2. Wärmekammer (1d) nach Anspruch 1,
**dadurch gekennzeichnet, dass**
sie eine Mehrzahl von zweiten Zwischenabschnitten und eine Mehrzahl der ersten Abschnitte (18a) aufweist, die der Heizeinrichtung (4) zugeordnet sind und zwischen die zweiten Zwischenabschnitte und die zweiten Endabschnitte (18b, 18c) dazwischengelegt sind, an mindestens zwei Flächen der ersten Abschnitte (18a), von denen jeder an mindestens einen der zweiten Zwischenabschnitte oder der zweiten Endabschnitte (18b, 18c) angrenzt, wobei es miteinander verbundene Kanäle (25, 26, 27) für den internen Fluss von Wasser gibt.

3. Wärmekammer (1a, 1b, 1d, 1e) nach einem der Ansprüche 1 und 2,
**dadurch gekennzeichnet, dass**
die Heizeinrichtung (4) für jeden der ersten Abschnitte (2a, 18a) mindestens einen elektrischen Widerstand aufweist, der sich Im Wesentlichen auf einer Längsebene des Grundkörpers erstreckt.

4. Wärmekammer (1a, 1b, 1d, 1e) nach einem oder mehreren der vorangehenden Ansprüche,
**dadurch gekennzeichnet, dass**
die internen Strömungskanäle (10, 11, 25, 26, 27, 51, 52) im Wesentlichen parallel zu dem mindestens einen elektrischen Widerstand liegen.

5. Wärmekammer (1a, 1b, 1d, 1e) nach einem oder mehreren der vorangehenden Ansprüche,
**dadurch gekennzeichnet, dass**
sie mindestens einen Einlass (13, 29) und mindestens einen Auslass (14, 30) der internen Flusskanäle (10, 11, 25, 26, 51, 52) jeweils für das Hineinfließen und Hinausfließen von Wasser in den/aus dem Grundkörper aufweist.

6. Wärmekammer (1b, 1d, 1e) nach einem oder mehreren der vorangehenden Ansprüche,
**dadurch gekennzeichnet, dass**
der mindestens eine Einlass (13, 29) und der mindestens eine Auslass (14, 30) an zwei gegenüberliegenden Flächen des ersten Abschnitts (2a) angeordnet sind, die End- bzw. Stirnflächen (8, 9, 19, 20) der Wärmekammer (1a, 1d, 1e) definieren.

7. Wärmekammer (1a) nach einem oder mehreren der Ansprüche 1 bis 5,
**dadurch gekennzeichnet, dass**
der mindestens eine Einlass (13) und der mindestens eine Auslass (14) beide an einer der End- bzw. Stirnflächen (8, 9) des Grundkörpers angeordnet sind.

8. Wärmekammer (1a, 1b, 1d, 1e) nach Anspruch 6 oder 7,
**dadurch gekennzeichnet, dass**
der Grundkörper mindestens einen zentralen Teil (3, 23) aufweist, der den ersten Abschnitt (2a, 18a) definiert und zwischen zwei Abdeckelementen (5, 6, 21, 22) zwischengeschaltet ist, die dem zentralen Abschnitt (3, 23) zugeordnet sind und hiervon getrennt werden können, wobei die beiden Abdeckelemente (5, 6, 21, 22) die zweiten Endabschnitte (2b, 2c, 18b, 18c) definieren, die an zwei gegenüberliegenden Flächen des ersten Abschnitts (2a) angeordnet sind, die die End- bzw. Stirnflächen (8, 9, 19, 20) der Wärmekammer (1a, 1b, 1d, 1e) definieren.

9. Wärmekammer (1d) nach Anspruch 6 oder 7,
**dadurch gekennzeichnet, dass**
der Grundkörper eine Mehrzahl von zentralen Teilen (23) aufweist, die aufeinander gestapelt sind, wobei jeder Teil monolithisch einen der ersten Abschnitte (18a) und einen der zweiten Zwischenabschnitte definiert, wobei die gestapelten zentralen Teile (23) zwischen zwei Abdeckelemente (19, 20) zwischengeschaltet sind, die die zweiten Endabschnitte (18b, 18c) definieren und dazu fähig sind, den gestapelten zentralen Teilen (23) zugeordnet bzw. mit diesen verknüpft zu werden.

## Revendications

1. Chambre de chaleur (1a, 1b, 1d, 1e) pur machines pour infusions et similaires, en particulier pour chauffer de l'eau pour la préparation d'un café expresso, comprenant un corps principal qui est réalisé dans un matériau thermoconducteur et pourvu d'au moins une première portion (2a, 18a) qui est associée à des moyens chauffants (4) et interposée entre au moins deux secondes portions d'extrémité (2b, 2c, 18b, 18c) dudit corps principal, au niveau d'au moins deux faces de ladite une première portion (2a, 18a), dont chacune jouxte au moins une desdites secondes portions d'extrémité (2b, 2c, 18b, 18c), étant prévus au moins deux canaux (10, 11, 25, 26, 27, 51, 52), reliés l'un à l'autre, pour l'écoulement interne de l'eau, ladite au moins une première portion (2a, 18a) et lesdites au moins deux portions d'extrémité étant toutes des portions distinctes qui forment ledit corps principal, lesdits canaux étant respectivement définis dans les faces opposées de ladite au moins une première portion et reliés l'un à l'autre, de façon que l'eau s'écoule le long d'un canal, puis passe dans l'autre canal, ledit moyen chauffant (4) étant interposé entre lesdits au moins deux canaux (10, 11, 25, 26, 27, 51, 52), **caractérisée en ce que** lesdits au moins deux canaux, reliés l'un à J'autre, sont définis par deux rainures ouvertes vers le haut qui sont fermées par lesdites au moins deux secondes portions d'extrémité.

2. Chambre de chaleur (1d) suivant la revendication 1, **caractérisée en ce qu'**elle comprend une pluralité de secondes portions intermédiaires et une pluralité desdites premières portions (18a) qui sont associées auxdits moyens chauffants (4) et interposées entre lesdites secondes portions intermédiaires et lesdites secondes portions d'extrémité (18b, 18c), au niveau d'au moins deux faces de chacune desdites premières portions (18a), faces, qui jouxtent chacune au moins une desdites secondes portions intermédiaires ou desdites secondes portions d'extrémité (18b, 18c), étant prévus des canaux (25, 26, 27), reliés l'un à l'autre, pour l'écoulement interne de l'eau.

3. Chambre de chaleur (1a, 1b, 1d, 1e) suivant une des revendications 1 et 2, **caractérisée en ce que** lesdits moyens chauffants (4) comprennent, pour chacune desdites premières portions (2a, 18a), au moins une résistance électrique qui s'étend essentiellement sur un plan longitudinal dudit corps principal.

4. Chambre de chaleur (1a, 1b, 1d, 1e) suivant une ou plusieurs des revendications précédentes, **caractérisée en ce que** chacun desdits canaux d'écoulement internes (10, 11, 25, 26, 27, 51, 52) est sensiblement parallèle à ladite au moins une résistance électrique.

5. Chambre de chaleur (1a, 1b, 1d, 1e) suivant une ou plusieurs des revendications précédentes, **caractérisée en ce qu'**elle comprend au moins une entrée (13, 29) et au moins une sortie (14, 30) desdits canaux d'écoulement internes (10, 11, 25, 26, 51, 52) respectivement pour l'écoulement entrant et l'écoulement sortant d'eau vers/depuis ledit corps principal.

6. Chambre de chaleur (1b, 1d, 1e) suivant une ou plusieurs des revendications précédentes, **caractérisée en ce que** ladite au moins une entrée (13, 29) et ladite au moins une sortie (14, 30) sont disposées au niveau de deux faces opposées de ladite première portion (2a) qui définissent les faces d'extrémité (8, 9, 19, 20) de ladite chambre de chaleur (1a, 1d, 1e).

7. Chambre de chaleur (1a) suivant une ou plusieurs revendications 1 à 5, **caractérisée en ce que** ladite au moins une entrée (13) et ladite au moins une sortie (14) sont toutes deux disposées dans une desdites faces d'extrémité (8, 9) dudit corps principal.

8. Chambre de chaleur (1a, 1b, 1d, 1e) suivant la revendication 6 ou 7, **caractérisée en ce que** ledit corps principal comprend au moins une partie centrale (3, 23) qui définit ladite première portion (2a, 18a) et est interposée entre deux éléments couvrants (5, 6, 21, 22) qui sont associés à ladite partie centrale (3, 23) et peuvent être séparés de celle-ci, lesdits deux éléments couvrants (5, 6, 21, 22) définissant lesdites secondes portions d'extrémité (2b, 2c, 18b, 18c) qui sont disposées au niveau de deux faces opposées de ladite première portion (2a) et définissent les faces d'extrémité (8, 9, 19, 20) de ladite chambre de chaleur (1a, 1b, 1d, 1e).

9. Chambre de chaleur (1d) suivant la revendication 6 ou 7, **caractérisée en ce que** ledit corps principal comprend une pluralité de parties centrales (23) qui sont empilées l'une sur l'autre, chaque partie définissant de façon monolithique une desdites premières portions (18a) et une parmi lesdites secondes portions intermédiaires, lesdites parties centrales empilées (23) étant interposées entre deux éléments couvrants (19, 20) qui définissent lesdites secondes portions d'extrémité (18b, 18c) et sont capables d'être associées auxdites parties centrales empilées (23).
